# EUROPÄISCHE PATENTSCHRIFT

(11) **EP 3 669 111 B1**
(45) Veröffentlichungstag und Bekanntmachung des Hinweises auf die Patenterteilung: **15.11.2023**
(21) Anmeldenummer: 18742949.3
(22) Anmeldetag: 05.07.2018
(51) Int. Cl.: F16L 57/00, B65D 59/02, F16L 55/11

(54) **VERSCHLUSSVORRICHTUNG**
CLOSURE DEVICE
DISPOSITIF DE FERMETURE

(30) Priorität: 16.08.2017 DE 202017104929 U
(43) Veröffentlichungstag der Anmeldung: 24.06.2020
(73) Patentinhaber: Rosen Swiss AG, 6370 Stans (CH)
(72) Erfinder: PETRING, Jörg, 49808 Lingen (DE)
(74) Vertreter: Wischmeyer, André
(86) Internationale Anmeldenummer: PCT/EP2018/068281
(87) Internationale Veröffentlichungsnummer: WO 2019/034327

(56) Entgegenhaltungen:
- DE-U1-202015 002 284
- FR-A1- 2 769 351
- NL-C- 2 001 969
- US-A1- 2003 000 590
- US-A1- 2009 301 568

## Beschreibung

Die Erfindung betrifft eine Verschlussvorrichtung zum Verschließen eines Rohres, mit einem Trägerelement, zumindest einer Dichtkontaktfläche, einer Verschlussvorrichtungsmittelachse und zumindest einer Betätigungsvorrichtung mit mindestens einem Verstellelement. Das Verstellelement ist relativ zum Trägerelement aus einer ersten Position in eine zweite Position überführbar, wobei in der zweiten Position des Verstellelementes die Verschlussvorrichtung sich in einer Dichtstellung befindet. Das Verstellelement ist relativ zum Trägerelement um eine Betätigungsachse schwenkbar oder drehbar, die höchstens um 10° zur Verschlussvorrichtungsmittelachse verkippt angeordnet ist.

Eine derartige Verschlussvorrichtung wird beispielsweise zum Verschließen von zum Bau von Pipelines verwendeten Rohren genutzt. Die Dichtkontaktfläche liegt in einer Stellung, in der das Rohr von der Verschlussvorrichtung verschlossen wird, an der Rohroberfläche an. Die Verschlussvorrichtungsmittelachse fällt in dieser Stellung mit der Längsmittelachse des Rohres zusammen.

Eine Verschlussvorrichtung ist etwa aus der DE 10 2009 017 975 A1 bekannt. Die offenbarte Verschlussvorrichtung wird durch Einschieben in die axiale Richtung des Rohres teilweise in dessen Rohrinnenraum eingebracht. Nach der Einbringung in das Rohr liegt die Dichtkontaktfläche vollumfänglich flächig an der Rohrinnenfläche an. Ein in radialer Richtung ausgeprägter Kragen der Verschlussvorrichtung liegt dabei an der mit einem weiteren Rohr zu verbindenden Stirnfläche des Rohres an. Um eine ausreichende Dichtheit des Verschlusses gewährleisten zu können, muss die Dichtkontaktfläche mit einer Mindestflächenpressung an der Rohrinnenfläche anliegen.

In der Regel wird je eine Verschlussvorrichtung in beide Öffnungen eines Rohres eingesetzt. Der so ausgebildete, zwischenliegende Verschlussraum soll dadurch vor dem Eindringen von Regenwasser und Fremdkörpern geschützt werden und somit im Einzelnen Korrosion an der an den Verschlussraum angrenzenden Rohroberfläche verhindert werden.

Bei dieser Ausführung der Verschlussvorrichtung ist zu deren Einsatz in das Rohr ein immenser Kraftaufwand nötig. Die für die ausreichende Dichtheit nötige radiale Flächenpressung zwischen Dichtkontaktfläche und Rohrinnenfläche führt zu einer hohen axialen Kraft, die zum Einschieben der Verschlussvorrichtung in das Rohr nötig ist und einen hohen Aufwand bei der Montage verursacht. Eine weitere nachteilige Auswirkung des Einschiebens hat die Reibung von Dichtkontakt- und Rohrinnenfläche aufeinander, wodurch zumindest der weichere der beiden Kontaktpartner durch den jeweils anderen zerkratzt wird. Diese Beeinträchtigung der Oberflächeneigenschaften beeinflusst die Dichtheit des Verschlusses insbesondere bei mehrmaligem Einsetzen der Verschlussvorrichtung negativ. Durch den Kragen und den sich daran anschließenden zylindermantelförmigen Abschnitt ist der Einsatz der Verschlussvorrichtung begrenzt auf offene Rohrenden, welche zumindest in einem ersten Abschnitt gerade verlaufen. Die Erfahrung hat außerdem gezeigt, dass der Kragen den Abfluss von Flüssigkeit aus dem Bereich der Stirnseite des Rohres erschwert und somit Korrosion in dem Bereich fördert.

Eine bekannte Verschlussvorrichtung ist aus der DE 20 2015 002 284 U1 bekannt. Diese Verschlussvorrichtung wird mittels eine Schraube in die Dichtstellung überführt.

Weitere bekannte Verschlussvorrichtungen der eingangs genannten Art sind aus der FR 2 769 351 A1, der US 2009/0301568 A1 und der GB 2 110 653 A bekannt.

Aufgabe der vorliegenden Erfindung ist die Bereitstellung eines einfach und schnell montierbaren Verschlusselementes mit einer möglichst prozesssicheren Abdichtung.

Erfindungsgemäß wird die Aufgabe durch eine Verschlussvorrichtung nach dem Anspruch 1, wobei die Betätigungsvorrichtung ein Exzenterelement umfasst.

Das Exzenterelement ist um die Betätigungsachse schwenkbar. Eine von der Betätigungsachse abgewandte Gleitoberfläche des Exzenterelementes hat einen variierenden Abstand von der Betätigungsachse. Befindet sich die Verschlussvorrichtung innerhalb des Rohres mit einem zur Verschlussvorrichtung korrespondierenden Durchmesser, zeichnet sich die Dichtstellung dadurch aus, dass die Dichtkontaktfläche an der Rohrinnenfläche anliegt und zumindest mit einer Mindestflächenpressung auf die Rohroberfläche einwirkt. Befindet sich die Verschlussvorrichtung dagegen nicht innerhalb eines Rohres, zeichnet sich die Dichtstellung dadurch aus, dass in ihr die Dichtkontaktfläche einen größeren Abstand zur Verschlussvorrichtungsmittelachse hat als vor Erreichen der Dichtstellung.

Die Betätigungsvorrichtung dient der Übertragung bzw. Übersetzung der Bewegung des Verstellelementes zur Herbeiführung der Dichtstellung der Verschlussvorrichtung. Das Trägerelement dient der Abstützung der Betätigungsvorrichtung. Dabei ist das Trägerelement vorzugsweise ringförmig und um die Verschlussvorrichtungsmittelachse umlaufend ausgebildet. In einer vorteilhaften Ausgestaltung der Erfindung weist die Verschlussvorrichtung mehrere, insbesondere zwei Trägerelemente auf. Zumindest ein Bestandteil der Betätigungsvorrichtung liegt dabei zwischen zwei Trägerelementen. Dadurch kann die Betätigungsvorrichtung besonders wirksam vor Umwelteinflüssen geschützt werden, was ihre Zuverlässigkeit erhöht.

Befindet sich die Verschlussvorrichtung innerhalb des Rohres in Dichtstellung, fällt die Verschlussvorrichtungsmittelachse mit der Rohrlängsmittelachse zusammen. Sowohl die Rohrinnenfläche als auch die Dichtkontaktfläche haben bevorzugt in einer zur Verschlussvorrichtungsmittelachse orthogonalen Ebene betrachtet einen kreisrunden Querschnitt.

Hat die Dichtkontaktfläche einen davon abweichenden Querschnitt, insbesondere einen elliptischen Querschnitt, schneidet die Verschlussvorrichtungsmittelachse einen Querschnitt durch die Dichtkontaktfläche in einem Punkt, in dem die Gerade, die die beiden am weitesten voneinander entfernten Punkte der Dichtkontaktfläche im Querschnitt miteinander verbindet, die Gerade schneidet, die die beiden am wenigsten voneinander entfernten Punkte der Dichtkontaktfläche im Querschnitt miteinander verbindet.

Dadurch, dass die Verschlussvorrichtung erst an dem Ort in die Dichtstellung gebracht wird, an dem sie auch in Dichtstellung verweilen soll, ist die Montage sowie auch die Dichtqualität der Verschlussvorrichtung verbessert. Die Verschlussvorrichtung wird, während sich das Verstellelement in seiner ersten Position befindet und durch die Dichtkontaktfläche eine geringere Flächenpressung als die Mindestflächenpressung auf die Rohrinnenwand wirkt, innerhalb des zu verschließenden Rohres positioniert. Durch die aufgrund der geringen bzw. fehlenden Flächenpressung geringen axialen Widerstandskraft kann die Verschlussvorrichtung an beliebiger Stelle und mit nur geringem Kraftaufwand innerhalb des Rohres mit einem korrespondierenden Innendurchmesser positioniert werden, was die Montage wesentlich erleichtert. In Dichtstellung ist anschließend eine besonders sichere Abdichtung gewährleistet, da die Dichtfläche zuvor nur höchstens unwesentlich durch die Reibung an der Rohrinnenfläche modifiziert wurde. In der Dichtstellung werden die Dichtkontaktfläche und die Rohrinnenfläche nicht relativ zueinander bewegt, wodurch die Abdichtung besonders prozesssicher ist.

Das Verstellelement ist relativ zum Trägerelement um eine Betätigungsachse schwenkbar oder drehbar. Die Betätigungsachse ist höchstens um 10° zur Verschlussvorrichtungsmittelachse verkippt. Das Verstellelement hat bevorzugt die Form eines umzulegenden Hebels oder die einer Schraube, wodurch sich die Rotationsbewegung mit einer translatorischen Bewegung überlagert. Durch die Rotation des Verstellelementes um die Betätigungsachse ist die Verschlussvorrichtung für den einbauenden Monteur, der das Verstellelement überführt, besonders ergonomisch zu bedienen. Insbesondere die erfindungsgemäße

Rotation um die zur Verschlussvorrichtungsmittelachse im Wesentlichen parallele Betätigungsachse ist dabei besonders sicher durchführbar, da die Verschlussvorrichtung durch Aufliegen der Dichtkontaktfläche auf der Rohrinnenfläche eine den sicheren Stand der Verschlussvorrichtung gewährleistende Gegenkraft ausbildet. Durch die Form der Bewegungseinleitung wird die schnelle Montage von erfindungsgemäßen Verschlusselementen auch bei wiederholter Überführung dieser durch den Monteur in die Dichtstellung gewährleistet.

In einer zur Erfindung alternativen und nicht beanspruchten Ausführungsform ist das Verstellelement relativ zum Trägerelement parallel zur Betätigungsachse verschiebbar. Durch die axiale Verschiebung von seiner ersten Position in seine zweite Position ist es möglich, eine Mehrzahl an Verstellelementen besonders einfach gleichzeitig in die zweite Position zu überführen. Dem Monteur wird bei der Nutzung eines entsprechenden Werkzeugs die gleichzeitige, parallele Überführung der Verstellelemente durch eine einfache Krafteinleitung in axialer Richtung ermöglicht, was die Montage beschleunigt. Erfindungsgemäß umfasst die Betätigungsvorrichtung ein Exzenterelement. Das Exzenterelement ist um die Betätigungsachse schwenkbar und hat eine Gleitoberfläche, welche von der Betätigungsachse abgewandt ist und von der Betätigungsachse einen variierenden Abstand hat. Die Gleitoberfläche hat vorzugsweise eine zur Betätigungsachse parallele Erstreckung. Die Gleitoberfläche verläuft mit einem variierenden Radius zumindest teilweise um die Betätigungsachse. Durch das Schwenken des Exzenterelementes verändert sich in einer relativ zur Betätigungsachse ortsfesten, radialen Richtung der Abstand von der Gleitoberfläche des Exzenterelementes zur Betätigungsachse. Die Gleitoberfläche dient der Bewegung eines weiteren Elementes der Verschlussvorrichtung in diese Richtung, wodurch die Verschlussvorrichtung in Dichtstellung gebracht wird. Durch das Exzenterelement wird eine Rotationsbewegung um die Betätigungsachse in eine translatorische Bewegung übersetzt. Durch diese Bewegungsübersetzung kann die gewünschte Flächenpressung der Dichtkontaktfläche, welche in der Dichtstellung der Verschlussvorrichtung nötig ist, durch eine Kraft in radialer Richtung hergestellt werden, wobei in das Verstellelement verhältnismäßig nur eine erheblich geringere Kraft bzw. ein geringeres Drehmoment eingebracht werden muss. Dadurch nimmt die Belastung des Monteurs ab und die Montage wird vereinfacht.

In einer zur Erfindung alternativen und nicht beanspruchten Ausgestaltung umfasst die Betätigungsvorrichtung ein Schubelement, das parallel zur Betätigungsachse bewegbar ist. Das Schubelement weist ebenfalls eine von der Betätigungsachse abgewandte Gleitoberfläche mit einem variierenden Abstand von der Betätigungsachse auf. Der Abstand der Gleitoberfläche von der Betätigungsachse variiert dabei zumindest in axialer Richtung. Durch die axiale Bewegung des Schubelementes wird eine Bewegung in radialer Richtung von einem an der Gleitoberfläche anliegenden weiteren Element der Verschlussvorrichtung bewirkt. Wiederum bietet die variable Steigung der Gleitoberfläche die Möglichkeit, durch eine verhältnismäßig geringe Krafteinwirkung durch den Monteur eine ausreichende Flächenpressung der Dichtkontaktfläche herzustellen, wodurch die Montage wiederum erleichtert wird.

In einer weiteren alternativen und nicht benaspruchten Ausgestaltung umfasst die Betätigungsvorrichtung statt des Schubelementes ein Konuselement mit der Gleitoberfläche, die von der Betätigungsachse abgewandt ist und einen variierenden Abstand von der Betätigungsachse hat. Das Konuselement ist achsensymmetrisch zur Betätigungsachse ausgebildet. Die Verwendung eines solchen Konuselementes ermöglicht die gewünschte Übersetzung, wobei eine Bewegung mit rotatorischem und translatorischem Anteil parallel zur Betätigungsachse in eine rein translatorische Bewegung in radialer Richtung übersetzt wird. Die Verwendung des Konuselementes statt des Schubelementes vereinfacht den Aufbau der Verschlussvorrichtung insofern, als dass es eine translatorische Bewegung erzeugt, die unabhängig von einer eigenen Rotation ist. Durch die somit vereinfachte Lagerung ist die Funktion der Verschlussvorrichtung besonders zuverlässig und dessen Abdichtung besonders prozesssicher.

Je nach Steigung der Gleitoberfläche relativ zur Betätigungsachse ist die Übersetzung vorzugsweise selbsthemmend. Aktiv bewegt wird dabei das Exzenter-, das Schub- oder das Konuselement mittel- oder unmittelbar durch das Verstellelement, wodurch ein an der Gleitoberfläche anliegendes Element bewegt werden kann. Eine Bewegung des anderen Gleitoberfläche anliegenden Bauteils verursacht hingegen keine Bewegung des Exzenter-, Schub- oder Konuselements. Sowohl das Exzenterals auch das Konuselement sind vorzugsweise am Verstellelement anliegend angeordnet und daran fixiert. Dadurch wird die Reibung innerhalb der Betätigungsvorrichtung auf ein Mindestmaß reduziert.

Besonders bevorzugt ist das Verstellelement mit dem Exzenter-, dem Schub- oder dem Konuselement einstückig ausgebildet. Dadurch wird die Anzahl der verschleißbehafteten Bauteile reduziert und die Zuverlässigkeit der Verschlussvorrichtung erhöht.

Erfindungsgemäß umfasst die Verschlussvorrichtung zumindest ein Übertragungselement, welches durch die Überführung des Verstellelementes von der ersten in die zweite Position verlagert wird. Dabei wird es translatorisch und parallel zu einer Übertragungsachse verlagert. Das Übertragungselement dient zur Übertragung der auf die Verschlussvorrichtung einwirkenden Kraft zur Herstellung der erforderlichen Flächenpressung der Dichtkontaktfläche. Bevorzugt ist das Übertragungselement zumindest teilweise in einer Nut bzw. einem Spalt des Trägerelementes angeordnet und jedes Übertragungselement einem Verstellelement zugeordnet. Durch diese Form der Beweglichkeit ist das Übertragungselement besonders verschleißunanfällig. Das Übertragungselement ermöglicht eine zuverlässige Übertragung der eingebrachten Kraft zur Herstellung der Dichtstellung und sorgt somit für die prozesssichere Abdichtung des Rohres.

Bevorzugt ist die Übertragungsachse relativ zur Verschlussvorrichtungsmittelachse um 80° bis 100° verkippt. Dabei ist sie höchstens um ein Fünftel des kleinsten Abstandes der Dichtkontaktfläche zur Verschlussvorrichtungsmittelachse von der Verschlussvorrichtungsmittelachse beabstandet. Durch die bezüglich der Verschlussvorrichtungsmittelachse im Wesentlichen radial ausgerichtete Übertragungsachse ist eine auf das Verstellelement eingebrachte Kraft besonders einfach auf die Dichtkontaktfläche übertragbar und der Abstand zwischen Dichtkontaktfläche und Verstellelement auf kürzestmöglichem Weg überbrückbar. Durch die Übertragung der Kraft auf dem kürzesten Weg wird das Ausfallrisiko der Verschlussvorrichtung minimiert und die Montage vereinfacht.

In einer alternativen und nicht beanspruchten Ausgestaltung der Erfindung ist die Übertragungsachse parallel zur Verschlussvorrichtungsmittelachse angeordnet. Dadurch, dass das Übertragungselement parallel zur Verschlussvorrichtungsmittelachse bewegt wird, kann die Flächenpressung der zumindest einen Dichtkontaktfläche durch eine Bewegung von einer kleineren Zahl von Übertragungselementen erhöht werden. Durch die so ermöglichte vollumfänglich homogenere Krafteinwirkung auf die Dichtkontaktfläche ist die Abdichtung besonders sicher. Gleichzeitig wird durch die mögliche Reduktion die Anzahl an Übertragungselementen bei Erhalt eines vollumfänglich homogeneren Flächenpressungsaufbaus eine besonders große Ausfallsicherheit der Verschlussvorrichtung erreicht.

Besonders bevorzugt ist das Übertragungselement an der Gleitoberfläche anliegend angeordnet und wird durch die Bewegung des Gleitelementes bewegt. Da der Bereich des Übertragungselementes, welcher an der Gleitoberfläche anliegt, deren Bewegung aufgrund seiner eingeschränkten Beweglichkeit nicht folgen kann, kommt es zu einem reibungsbehafteten Gleiten des Übertragungselementes auf der Gleitoberfläche, während das Verstellelement aus seiner ersten Position in seine zweite Position überführt wird. Dabei wächst der Abstand des Übertragungselementes von der Betätigungsachse in dem Maß, wie auch der Abstand der Gleitoberfläche von der Betätigungsachse in Richtung der Übertragungsachse anwächst. Durch das unmittelbare Anliegen vom Übertragungselement an der Gleitoberfläche wird nur eine Mindestanzahl von Elementen für die Verschlussvorrichtung benötigt, wodurch die Ausfallwahrscheinlichkeit der Verschlussvorrichtung reduziert wird. Der Gradient der Abstandsänderung der Gleitoberfläche, d. h. die Abstandsänderung pro Winkel (Exzenterelement) oder pro Weg in axialer Richtung (Schubelement bzw. Konuselement), bestimmt die Übersetzung, mit der die Bewegung des Verstellelementes in die Bewegung des Übergangselementes umgeformt wird. Durch diese Ausführung der erfindungsgemäßen Verschlussvorrichtung existiert eine besonders einfache Form der Bewegungsübersetzung. Der besonders einfache Aufbau erhöht die Zuverlässigkeit der Abdichtung. Vorzugsweise ist die Gleitoberfläche so ausgeformt, dass die bewegliche Verbindung von Übertragungselement und Gleitoberfläche selbsthemmend ist. Im Einzelnen bedeutet das, dass zwar das Übertragungselement durch eine Bewegung der Gleitoberfläche bewegt werden kann, jedoch anders herum die Gleitoberfläche nicht durch eine Bewegung des Übertragungselementes bewegt werden kann. Ein etwaiges die Betätigungsvorrichtung in Dichtstellung feststellendes Sicherungselement ist aufgrund dieser Selbsthemmung nicht nötig, wodurch wiederum die Prozesssicherheit der Abdichtung durch die Verschlussvorrichtung erhöht ist.

Vorzugsweise ist zwischen dem Trägerelement und dem Übertragungselement zumindest eine Führungsanordnung angeordnet, die die Bewegung des Übertragungselementes parallel zur Übertragungsrichtung führt. Die Führungsanordnung gewährleistet eine exakte Verlagerung des Übertragungselementes in die gewünschte Bewegungsrichtung und damit innerhalb des Rohrinnenraumes bei Überführung des Verstellelementes von seiner ersten in seine zweite Position eine besonders homogene Erhöhung der Flächenpressung der Dichtkontaktfläche. Die Führungsanordnung verhindert etwa ein Verkanten des Übertragungselementes innerhalb des Trägerelementes. Sowohl die Montage wird dadurch vereinfacht als auch der Vorgang der Verschließens prozesssicherer.

Bevorzugt umfasst die Verschlussvorrichtung mindestens drei Übertragungselemente mit jeweils zumindest einer Pressfläche, welche von der Verschlussvorrichtungsmittelachse abgewandt ist. Die Pressfläche weicht in der Dichtstellung des Verschlusselementes von einer gedachten Kreiszylindermantelfläche um höchstens ein Fünftel des Radius der Kreiszylindermantelfläche ab. Die Symmetrieachse der Kreiszylindermantelfläche fällt dabei mit der Verschlussvorrichtungsmittelachse zusammen. Die Pressfläche ist in der Dichtstellung bei Befinden der Verschlussvorrichtung innerhalb des Rohrinnenraumes der Rohrinnenfläche zugewandt und die Übertragungselemente in relativ zur Verschlussvorrichtungsmittelachse radialer Richtung bewegbar. Sie ist die am weitesten von der Verschlussvorrichtungsmittelachse beabstandete Oberfläche des Übertragungselementes. In Dichtstellung liegt die Pressfläche entweder unmittelbar an der Rohrinnenfläche an oder übt mittelbar, über ein anliegendes weiteres Bauteil der Verschlussvorrichtung, eine Pressung darauf aus. Die Pressflächen haben vorzugsweise bei Betrachtung in Richtung der Verschlussvorrichtungsmittelachse einen kreisbogenförmigen Querschnitt, um gegenüber einer Rohrinnenfläche mit einem kreisrunden Querschnitt eine besonders homogene Flächenpressung auszubilden. Liegt die Pressfläche in der Dichtstellung innerhalb des Rohres unmittelbar an der Rohrinnenfläche an, fällt die Kreiszylindermantelfläche mit der Rohrinnenfläche zusammen. Zumindest drei Übertragungselemente sind besonders vorteilhaft, da durch diese Anzahl an Übertragungselementen ein beliebiger Anteil des Umfangs der Verschlussvorrichtung ausgebildet bzw. Kraft auf die Dichtkontaktfläche aufgebracht werden kann. Vorteil der so geformten Pressflächen ist die Möglichkeit einer besonders homogenen Flächenpressung der Dichtkontaktfläche, wodurch eine besonders zuverlässige Abdichtung erreicht wird.

Befindet sich in der Dichtstellung der Verschlussvorrichtung innerhalb des Rohrinnenraumes ein weiteres Element der Verschlussvorrichtung zwischen Pressfläche und Rohrinnenfläche, weist die Pressfläche vorzugsweise eine mit der Form dieses Elementes korrespondierende Vertiefung auf, um dieses Element besonders zuverlässig zu positionieren.

Besonders bevorzugt sind die Pressflächen der Übertragungselemente bei Betrachtung in Richtung der Verschlussvorrichtungsmittelachse vollumfänglich um die Verschlussvorrichtungsmittelachse verlaufend angeordnet. Das dient der in Umfangsrichtung vollumfänglichen und bündigen Anlage an die Rohrinnenfläche. Die Pressflächen der Übertragungselemente sind in der Dichtstellung der Verschlussvorrichtung in tangentialer Richtung maximal um ein Zehntel ihres minimalen Abstandes zur Verschlussvorrichtungsmittelachse voneinander beabstandet. Somit wird in der Dichtstellung durch die Pressflächen vollumfänglich eine Kraft auf die Rohrinnenfläche wirksam, entweder unmittelbar oder bei einem zwischen Pressfläche und Rohrinnenfläche angeordneten weiteren Element mittelbar.

Die Pressflächen bilden zusammen eine die Verschlussvorrichtungsmittelachse umschließende Pressgesamtfläche, die höchstens geringe Unterbrechungen aufweist und dessen Abstand zur Verschlussvorrichtungsmittelachse sich einheitlich verändern lässt und in Dichtstellung maximal ist. Durch die Möglichkeit des vollumfänglichen "Zusammenziehens" der Übertragungselemente ist die Montage der Verschlussvorrichtung wesentlich vereinfacht. Während das Verstellelement in der ersten Position angeordnet ist und die Pressflächen einen geringeren Radius als in Dichtstellung haben, lässt sich die Verschlussvorrichtung bequem innerhalb des Rohres in axialer Richtung verschieben. Bei der anschließenden Überführung der Verschlussvorrichtung in die Dichtstellung werden alle Pressflächen radial in Richtung der Rohrinnenfläche bewegt, wodurch die Abnutzung der Dichtkontaktfläche minimal ist.

In einer vorteilhaften Ausgestaltung der Erfindung überlagern sich zwei benachbarte Übertragungselemente bei Befinden des Verstellelementes in der ersten Position bei Betrachtung der Übertragungselemente in Richtung der Verschlussvorrichtungsmittelachse mit je einem Seitenabschnitt. Durch die Überlagerung der Seitenabschnitte wird ermöglicht, dass in Dichtstellung, in der die Pressgesamtfläche ihres maximalen Radius hat, in tangentialer Richtung nur geringfügige Lücken zwischen zwei benachbarten Pressflächen entstehen. Dadurch, dass die Übertragungsachsen der Übertragungselemente bevorzugt jeweils radial relativ zur Verschlussvorrichtungsmittelachse orientiert sind, überlagern sich bei einer Bewegung der Übertragungselemente in Richtung der Verschlussvorrichtungsmittelachse deren Seitenabschnitte um in Dichtstellung eine geschlossene Pressgesamtfläche zu ermöglichen. Die Bewegung der Übertragungselemente relativ zueinander bewirkt dabei eine Annäherung derer, welche sich in der Überlagerung der Seitenabschnitte niederschlägt. Die so ermöglichte weitgehend lückenlose Ausbildung der Pressgesamtfläche in Dichtstellung ermöglicht eine besonders prozesssichere Abdichtung des Rohres durch die Verschlussvorrichtung.

Vorzugsweise haben die Übertragungselemente zwei Seitenabschnitte, die einen Mittelabschnitt begrenzen. Die in Richtung der Verschlussvorrichtungsmittelachse gemessene Stärke der Seitenabschnitte ist um zumindest ein Drittel, insbesondere um die Hälfte der Stärke des Mittelabschnittes geringer als dessen Stärke. Die einander zugewandten Seitenabschnitte zweier Übertragungselemente sind dabei so positioniert, dass sie, zumindest bei Befinden des Verstellelementes in der ersten Position, in axialer Richtung aneinander angrenzen. Durch das Wachsen des Pressgesamtflächenumfangs bei der Überführung der Verschlussvorrichtung in die Dichtstellung verschieben sich die Seitenabschnitte insofern zueinander, als dass die Fläche, in der sie sich überlagern, abnimmt. Durch das Eingreifen der Seitenabschnitte in eine jeweils gegenüberliegende Ausnehmung, welche aufgrund der geringeren Stärke der Seitenabschnitte gegenüber dem Mittelabschnitt und aufgrund der unterschiedlichen axialen Positionierung banachbarter Seitenabschnitte entsteht, wächst der Abstand der benachbarten Pressflächen bei Überführung der Verschlussvorrichtung in die Dichtstellung nicht notwendigerweise an, es entstehen lediglich einseitige Ausnehmungen in der Pressfläche, deren Erstreckung in axialer Richtung geringer ist als die Stärke des Mittelabschnittes. Besonders bevorzugt ist die Stärke der Seitenabschnitte halb so groß wie die des Mittelabschnittes, da dadurch diese Ausnehmungen sich lediglich über die halbe Breite der Pressfläche erstrecken und die Breite der Mittelabschnitte gleich der Breite der Pressgesamtfläche ist. Insgesamt wird durch diese Ausgestaltung auch im Bereich der Seitenabschnitte eine besonders homogene Flächenpressung zwischen der Rohrinnenfläche und der Dichtkontaktfläche erzeugt, wodurch die Dichtung besonders zuverlässig ist.

In einer zur Erfindung alternativen und nicht beanspruchten Ausführungsform ist das Verstellelement durch eine Bewegung in eine um 70 bis 110° gegenüber der Verschlussvorrichtungsmittelachse verkippten Richtung aus der ersten in die zweite Position überführbar. Durch diese Form der Bewegung des Verstellelementes wird diese besonders einfach in eine radiale Anpressung der Dichtkontaktfläche übersetzt, da die Bewegungsrichtung des Verstellelementes und die Richtung, mit der die Flächenpressung der Dichtkontaktfläche wirkt, in einer Ebene zueinander angeordnet werden können. Das ermöglicht eine einfache Bewegungsübersetzung und damit eine hohe Zuverlässigkeit der Verschlussvorrichtung. In diesem Fall ist die Bewegungsrichtung des Verstellelementes im Wesentlichen unmittelbar parallel zur Wirkrichtung der Flächenpressung der Dichtkontaktfläche. Die Flächenpressung ist somit unmittelbar durch das Verschieben des Verstellelementes zu erzeugen, was einen einfachstmöglichen Aufbau der Verschlussvorrichtung ermöglicht und somit ihre Zuverlässigkeit erhöht.

Besonders bevorzugt sind das Verstellelement und das Übertragungselement in dieser Ausgestaltung einstückig.

In einer zur Erfindung alternativen und nicht beanspruchten Ausführungsform wird bei Erreichen der zweiten Position des Verstellelementes Energie durch zumindest einen Kraftspeicher freigesetzt. Diese Energie dient der Herstellung der Dichtstellung. Beim Kraftspeicher handelt es sich vorzugsweise um eine Feder, welche sich, solange das Verstellelement in seiner ersten Position angeordnet ist, in einem gespannten Zustand befindet. Bei Erreichen der zweiten Position des Verstellelementes wird die Feder gelöst und durch diese gespeicherte Energie freigesetzt. Die durch den Kraftspeicher ausgeübte Kraft bewirkt eine Flächenpressung der Dichtkontaktfläche. Diese Ausführungsform der Verschlussvorrichtung ist besonders einfach und schnell montierbar, da durch den Monteur keine Kraft zur Erzeugung der nötigen Flächenpressung in die Verschlussvorrichtung eingebracht werden muss. Der Kraftspeicher ist weiterhin so einstellbar, dass dadurch eine homogene Flächenpressung optimaler Größe erreicht wird, was für eine besonders zuverlässige Abdichtung sorgt.

Vorzugsweise umfasst die Verschlussvorrichtung ein Dichtelement, das die Dichtkontaktfläche aufweist. Das Dichtelement liegt somit in Dichtstellung unmittelbar an der Rohrinnenfläche an. Durch die Trennung von Dichtelement und Betätigungsvorrichtung bzw. Übertragungselement können sowohl für das Dichtelement als auch für die Elemente der Betätigungsvorrichtung die jeweils optimalen Materialien verwendet werden und die Erneuerung der Dichtkontaktfläche vereinfacht werden. Im Einzelnen kann für das Dichtelement ein elastisches Material zur zuverlässigen Anlage an die Rohrinnenfläche verwendet werden, während für kraftübertragende Elemente der Betätigungsvorrichtung steifere Materialien Anwendung finden. Durch diese Trennung der Verschlussvorrichtungsbestandteile wird deren Funktion und der zum jeweiligen Ersatz nötige Aufwand optimiert und somit die Abdichtung besonders zuverlässig erfolgen.

Bevorzugt weist die Verschlussvorrichtung genau ein Dichtelement auf, welches als um die Verschlussvorrichtungsmittelachse umlaufende Ringdichtung ausgebildet ist. Dieses Dichtelement weist die zumindest eine Dichtkontaktfläche auf. Die Ringdichtung liegt in der Dichtstellung vollumfänglich an der Rohrinnenfläche an, wodurch auch die zumindest eine Dichtkontaktfläche im Wesentlichen die Form einer Dichtkontaktfläche hat. Die Ringdichtung kann sowohl als Kreuzdichtung als auch als Dichtring mit einem im entspannten Zustand im Wesentlichen runden Querschnitt ausgeführt werden. Eine Kreuzdichtung hat in der Dichtstellung vorzugsweise zwei Dichtkontaktflächen. Das Dichtelement hat in der Dichtstellung entlang des Umfangs der Verschlussvorrichtung an jeder Stelle einen größeren Außenradius als das Trägerelement, so dass nur das Dichtelement Kontakt zur Rohrinnenfläche hat. Vorteil der Ringdichtung ist eine besonders prozesssichere Abdichtung dadurch, dass durch das nur eine Dichtelement eine die Verschlussvorrichtungsmittelachse vollständig umlaufende Dichtkontaktfläche mit einer durch den konstanten Querschnitt des Dichtelementes begründeten konstanten Breite.

Besonders bevorzugt ist das Dichtelement in der Dichtstellung zumindest teilweise am Übertragungselement anliegend. Durch den Kontakt von Dichtelement und Übertragungselement wird die die nötige Flächenpressung erzeugende Kraft unmittelbar vom Übertragungselement auf das Dichtelement übertragen. Diese Form der Übertragung reduziert das Ausfallrisiko der Verschlussvorrichtung und macht die Abdichtung damit besonders zuverlässig. Ist das Übertragungselement translatorisch, parallel zur Verschlussvorrichtungsmittelachse bewegbar, wird die Flächenpressung durch eine Quetschung des Dichtelementes in axiale Richtung erreicht. Dabei wird ein Teil des Dichtelementes durch die Kraft des Übertragungselementes in radiale Richtung verdrängt.

In einer vorteilhaften Ausgestaltung der Erfindung besteht das Trägerelement überwiegend aus einem faserverstärkten polymeren Komposit, insbesondere einem Polypropylen-Glasfaser-Komposit. Dieses Material sorgt für eine ausreichende Stabilität des Trägerelementes. Außerdem sorgt die Materialwahl für ein geringes Gewicht des Trägerelementes. Dieses vereinfacht die Montage des Verschlusselementes, wobei die Stabilität eine prozesssichere Abdichtung ermöglicht.

Vorzugsweise hat die Verschlussvorrichtung einen optischen Indikator, welcher die Stellung des Verstellelementes anzeigt. Durch die optische Kenntlichmachung der Stellung kann der Monteur bereits aus größerer Entfernung erkennen, ob die Verschlussvorrichtung in die Dichtstellung überführt wurde. Das ermöglicht eine schnelle Kontrolle der Montage, insbesondere da durch den Indikator auch von der Stirnseite des Rohres beabstandete Verschlussvorrichtungen von außerhalb des Rohres kontrolliert werden können. Beispielsweise handelt es sich bei dem optischen Indikator um einen eingefärbten Bereich des Verstell- oder des Übertragungselementes. Welcher durch eine Ausnehmung in der Verschlussvorrichtung erst dann sichtbar wird, wenn die Dichtstellung zumindest teilweise erreicht ist. Insbesondere bei einer Mehrzahl von Verstellelementen kann bevorzugt in Umfangsrichtung verteilt eine Mehrzahl solcher Indikatoren vorgesehen sein, wobei jedem Verstellelement bevorzugt ein Indikator zugeordnet ist.

Bevorzugt ist am Trägerelement eine gas- und wasserdampfdurchlässige Membran angeordnet, die den Durchtritt von Gas und Wasserdampf durch die Verschlussvorrichtung ermöglicht. Die Membran ist besonders bevorzugt zentral in der Verschlussvorrichtung angeordnet, so dass die Verschlussvorrichtungsmittelachse die Membran schneidet. Die Membran ist bevorzugt bei der Herstellung des Trägerelementes in dieses eingespritzt oder am Trägerelement verschraubt. Der durch die Membran ermöglichte Gasdurchtritt sorgt bei Lagern des verschlossenen Rohres an der Umgebung für eine Durchlüftung des zwischen den Verschlussvorrichtungen liegenden Rohrinnenraumes. Durch die Möglichkeit des Luftaustrittes aus diesem Raum wird verhindert, dass sich ein Druckgefälle zwischen abgeschlossenem Rohrinnenraum und der Umgebung bildet, wodurch eine axiale Kraft auf die Verschlussvorrichtung wirken würde. Diese axiale Kraft könnte die Verschlussvorrichtung relativ zur Rohrinnenfläche verschieben und damit die zuverlässige Abdichtung gefährden.

Bevorzugt hält die Membran einer Wassersäule von mindestens 100 mm stand und ist undurchlässig für Staubpartikel mit einem Durchmesser von mehr als sechs Mikrometern. Dadurch wird der Rohrinnenraum besonders wirksam gegen das Eindringen von Flüssigkeiten und Fremdkörpern geschützt.

Die Membran ist vorzugsweise diffusionsoffen und ermöglicht in Zusammenhang mit einer hohen Wärmekapazität des Rohres die Ausbildung eines Mikroklimas innerhalb des Rohrinnenraumes. In dem Mikroklima finden Temperaturschwankungen relativ zur Umgebung verzögert statt und die Temperatur sinkt nie unterhalb des Taupunktes ab, da vor Erreichen des Taupunktes eine Abnahme der relativen Luftfeuchte durch Luftaustausch mit der Umgebung stattfindet.

Besonders bevorzugt sind am Trägerelement Handgriffe angeordnet. Durch diese Handgriffe kann der Monteur die zu montierende Verschlussvorrichtung besonders einfach innerhalb des Rohres positionieren.

Weitere Einzelheiten und Vorteile der Erfindung sind den nachfolgend beschriebenen, schematisch dargestellten Ausführungsbeispielen zu entnehmen, es zeigen:
- Fig. 1: eine erste erfindungsgemäße Verschlussvorrichtung in einer perspektivischen Darstellung,
- Fig. 2a: einen Innenteil der ersten erfindungsgemäßen Verschlussvorrichtung mit Exzenterelementen ohne Darstellung eines Teils des Trägerelementes in einer Draufsicht in axialer Richtung,
- Fig. 2b: den Innenteil der ersten erfindungsgemäßen Verschlussvorrichtung in einer Draufsicht in axialer Richtung, wobei die Verschlussvorrichtung sich in einer Dichtstellung befindet,
- Fig. 3a: eine zweite erfindungsgemäße Verschlussvorrichtung mit Exzenterelementen in einer Seitenansicht,
- Fig. 3b: die zweite erfindungsgemäße Verschlussvorrichtung in einer Seitenansicht mit Ausbrüchen,
- Fig. 3c: die Vergrößerung des in der Seitenansicht gemäß Fig. 3b umkreisten Ausbruchs,
- Fig. 4: einen Teil der ersten erfindungsgemäßen Verschlussvorrichtung mit Exzenterelementen in einer perspektivischen Detaildarstellung,
- Fig. 5a: eine dritte Verschlussvorrichtung nach einer nicht beanspruchten Ausführungsform mit Konuselementen in einer Seitenansicht mit Ausbrüchen,
- Fig. 5b: die Vergrößerung des in der Seitenansicht gemäß Fig. 5a umkreisten Ausbruchs,
- Fig. 6a: die dritte Verschlussvorrichtung in einer Seitenansicht mit Ausbrüchen, wobei sich die Verschlussvorrichtung in der Dichtstellung befindet,
- Fig. 6b: die Vergrößerung des in der Seitenansicht gemäß Fig. 6a umkreisten Ausbruchs,
- Fig. 7: eine vierte Verschlussvorrichtung nach einer nicht beanspruchten Ausführungsform in einer perspektivischen Darstellung mit einem Teil eines zu verschließenden Rohres, jeweils mit einem Ausbruch,
- Fig. 8a: die Vergrößerung einer Betätigungsvorrichtung der vierten Verschlussvorrichtung, wobei sich das Verstellelement in der ersten Position befindet,
- Fig. 8b: die Vergrößerung einer Betätigungsvorrichtung der vierten Verschlussvorrichtung, wobei sich das Verstellelement in der zweiten Position befindet.

Sofern sinnvoll sind funktional gleichwirkende Teile mit identischen Bezugsziffern versehen.

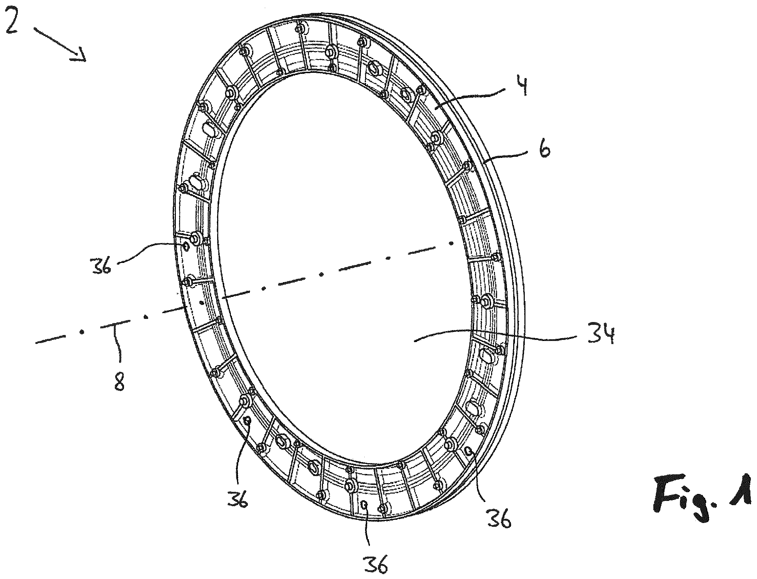

Fig. 1 zeigt eine Verschlussvorrichtung 2 zum Verschließen eines Rohres in einer perspektivischen Darstellung. Die Verschlussvorrichtung 2 weist ein Trägerelement 4 und eine Dichtkontaktfläche 6 auf. Eine Verschlussvorrichtungsmittelachse 8 schneidet die Verschlussvorrichtung 2 in deren Mittelpunkt. Der Außenradius der Verschlussvorrichtung 2 ist entlang ihres Umfangs konstant.

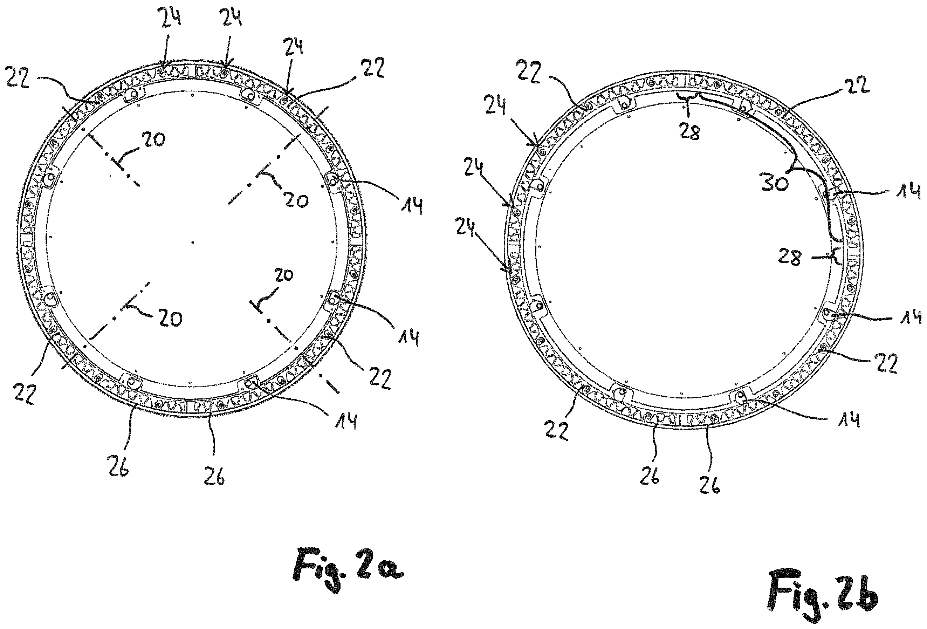

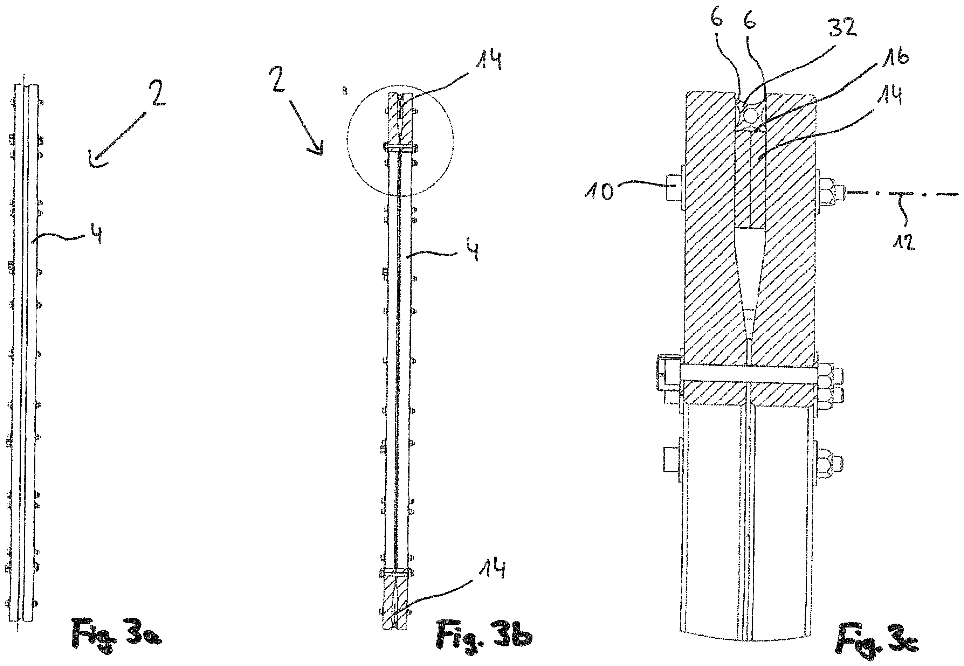

Die Verschlussvorrichtung 2 hat ein Verstellelement 10, das unter anderem in den Fig. 3c, 5b, 6b, 8a sowie 8b dargestellt ist. Dieses Verstellelement 10 ist relativ zum Trägerelement 4 aus einer ersten Position in eine zweite Position überführbar. In den Fig. 2a, 5b und 8a befindet sich das Verstellelement 10 der jeweils dargestellten Ausführungsform in seiner jeweiligen ersten Position. Die Fig. 2a, 6b und 8b zeigen die Verstellelemente 10 der gleichen Ausführungsbeispiele jeweils in ihrer zweiten Position.

In der zweiten Position des Verstellelementes 10 befindet sich die Verschlussvorrichtung 2 in seiner Dichtstellung. In der Dichtstellung liegt die Dichtkontaktfläche 6 bei Befinden der Verschlussvorrichtung 2 innerhalb eines Rohres mit korrespondierendem Durchmesser an dessen Rohrinnenfläche an und wirkt darauf mit einer Mindestflächenpressung. Außerhalb des Rohres zeichnet sich die Dichtstellung der Verschlussvorrichtung 2 dadurch aus, dass darin die Dichtkontaktfläche 6 der Verschlussvorrichtung 2 den maximalen Abstand von der Verschlussvorrichtungsmittelachse 8 hat.

Das Verstellelement 10 ist relativ zum Trägerelement 4 um eine Betätigungsachse 12 schwenkbar (erste, zweite und vierte Ausführungsform) oder drehbar (dritte Ausführungsform). In den ersten beiden Ausführungsformen, welche durch die Fig. 2a, 2b, 3b, 3c und 4 dargestellt sind, umfasst die Betätigungsvorrichtung ein Exzenterelement 14, das um die Betätigungsachse 12 schwenkbar ist. Das Exzenterelement 14 hat eine von der Betätigungsachse 12 abgewandte Gleitoberfläche 16, die einen variierenden Abstand von der Betätigungsachse 12 hat.

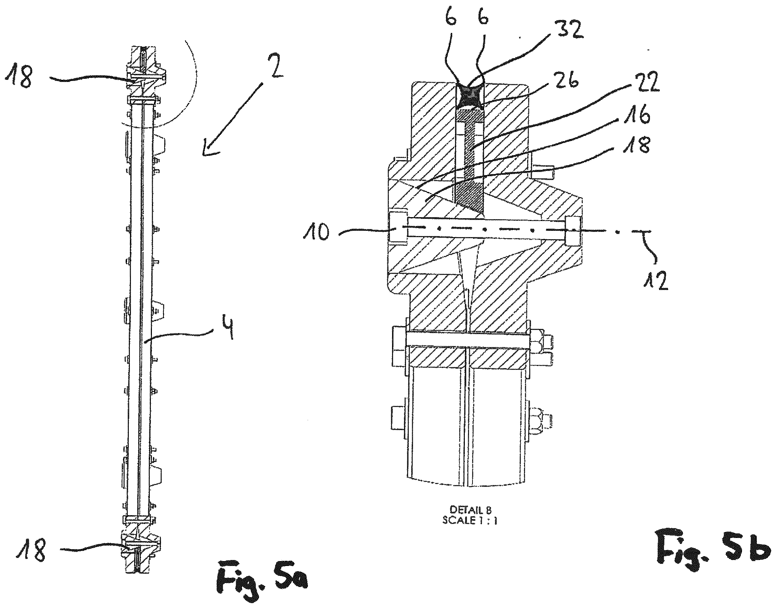

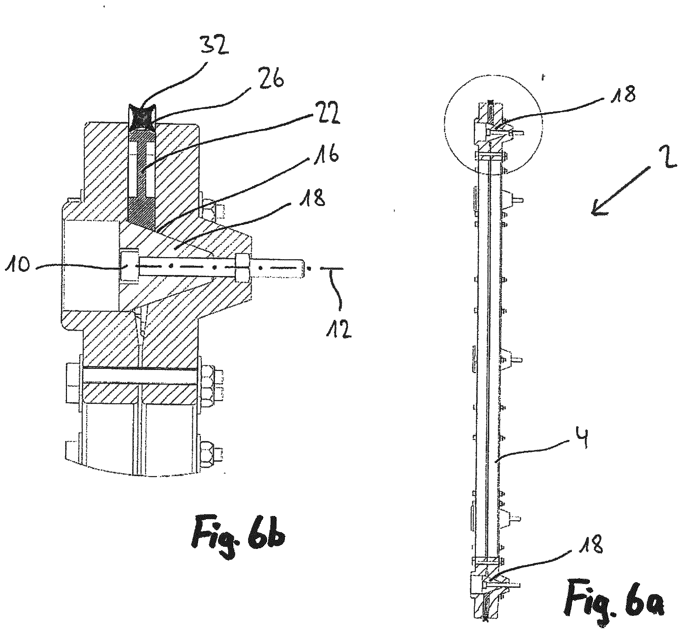

Alternativ umfasst die Betätigungsvorrichtung ein Konuselement 18, welches in der dritten Ausführungsform gemäß den Fig. 5a, 5b, 6a und 6b dargestellt ist. Das Konuselement 18 ist parallel zur Betätigungsachse 12 bewegbar. Auch das Konuselement 18 hat eine von der Betätigungsachse 12 abgewandte Gleitoberfläche 16, welche einen variierenden Abstand von der Betätigungsachse 12 hat.

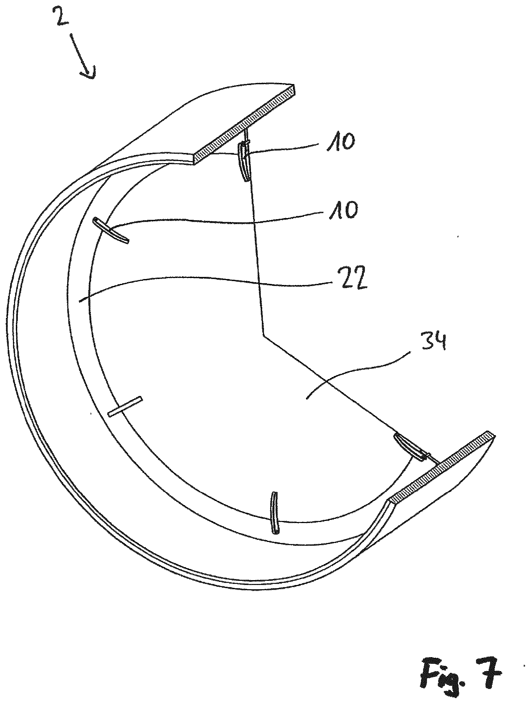

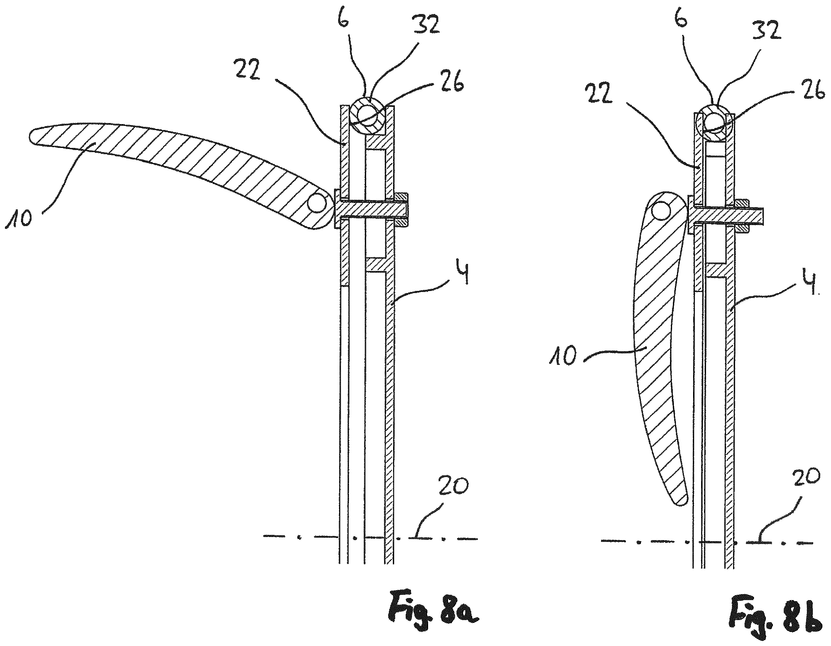

Unter anderem die Fig. 2a, 5b und 8a zeigen ein Übertragungselement 22, welches durch die Überführung des Verstellelementes 10 von der ersten in die zweite Position translatorisch, parallel zu einer Übertragungsachse 20 verlagert wird. In der ersten, zweiten und dritten Ausführungsform liegt das Übertragungselement an der Gleitoberfläche an und wird durch dessen Rotation von der Betätigungsachse beabstandet. Die Übertragungsachse 20 ist in den Ausführungsformen gemäß Fig. 2a und 5b orthogonal zur Verschlussvorrichtungsmittelachse 8 angeordnet. Davon abweichend ist sie beim vierten Ausführungsbeispiel gemäß den Fig. 7, 8a und 8b parallel zur Verschlussvorrichtungsmittelachse 8 angeordnet.

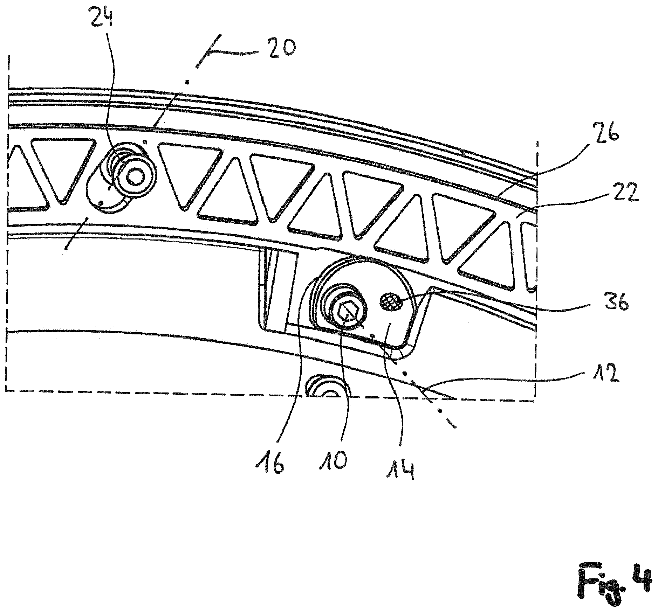

Die Fig. 2a, 2b und 4 zeigen eine Führungsanordnung 24, durch welche das Übertragungselement 22 relativ zum Trägerelement 4 parallel zur Übertragungsachse 20 geführt wird. Die Führungsanordnung umfasst zum einen ein Langloch im Übertragungselement und zum anderen einen Führungsstift des Trägerelementes. Während die Ausführungsform der erfindungsgemäßen Verschlussvorrichtung 2 gemäß den Fig. 2a und 2b vier Übertragungselemente 22 aufweist, weist die Ausführungsform gemäß Fig. 8a und 8b ein Übertragungselement 22 auf. Die vier Übertragungselemente 22 der ersten genannten Ausführungsform haben jeweils eine von der Verschlussvorrichtungsmittelachse 8 abgewandte Pressfläche 26, welche in der Dichtstellung des Verschlusselementes 10 in einer gedachten Kreiszylindermantelfläche angeordnet sind, deren Symmetrieachse mit der Verschlussvorrichtungsmittelachse 8 zusammenfällt. Die Pressflächen 26 verlaufen dabei vollumfänglich um die Verschlussvorrichtungsmittelachse 8 bzw. die Verschlussvorrichtung 2 an sich. Die Pressfläche vom Übertragungselement in den Fig. 7 und 8 ist dagegen senkrecht zur Verschlussvorrichtungsmittelachse angeordnet und das eine Übertragungselement axial verschieblich.

In den Figuren 1 bis 6b nicht dargestellt ist, dass sich bei Befinden der Verstellelemente 10 der ersten, zweiten und dritten Ausführungsform der Verschlussvorrichtung in ihrer ersten Position die jeweils benachbarten Übertragungselemente 22 sich mit je einem Seitenabschnitt 28 in axialer Richtung überlagern. Zwischen zwei Seitenabschnitten 28 liegt ein Mittelabschnitt 30. Die in Richtung der Verschlussvorrichtungsmittelachse 8 gemessene Stärke der Seitenabschnitte 28 ist um die Hälfte der Stärke des Mittelabschnittes 30 geringer als dessen Stärke. Somit können die aneinander angrenzenden Seitenabschnitte bei Verringerung des Pressflächenradius ineinander eingreifen.

In allen dargestellten Ausführungsformen weist die Verschlussvorrichtung 2 ein Dichtelement 32 auf (vergl. insbesondere Fig. 3c und Fig. 8a). Das Dichtelement 32 ist eine um die Verschlussvorrichtungsmittelachse 8 umlaufende Ringdichtung und hat bei der Ausführungsform gemäß Fig. 3c als Kreuzdichtung zwei Dichtkontaktflächen. Die in der durch Fig. 8a und 8b dargestellten Ausführungsformen gezeigte Ringdichtung hat dagegen einen runden Querschnitt und nur eine Dichtkontaktfläche 6. Unabhängig von der Form des Dichtelementes 32 liegt dieses an dem Übertragungselement 22 (vergl. z. B. Fig. 8a) bzw. den Übertragungselementen 22 (vergl. z. B. Fig. 2a oder 5b) an. In jeder dargestellten Ausführungsform weist die Verschlussvorrichtung 2 eine am Trägerelement 4 angeordnete gasdurchlässige Membran 34 auf, die zur Ermöglichung des Durchtritts von Gas durch die Verschlussvorrichtung 2 dient.

Fig. 4 zeigt auf dem Verstellelement 10 einen optischen Indikator 36. Dieser ist ein eingefärbter Bereich der Oberfläche des Verstellelementes 10, welcher bei der Überführung des Verstellelementes von der ersten in die zweite Position bewegt wird. Durch die Bewegung wird der eingefärbte Bereich aus einer Stellung, in der er durch das Trägerelement verdeckt wird, in eine Stellung überführt, in der er Deckungsgleich mit einer vom optischen Indikator 36 umfassten Ausnehmung im Trägerelement 4 ist. In Fig. 1 sind diese Ausnehmungen auf einer Hälfte des Trägerelementes 4 dargestellt. Durch diesen optischen Indikator 36 wird somit die Stellung des Verstellelementes nach außen kenntlich gemacht.

## Patentansprüche

1. Verschlussvorrichtung (2) zum Verschließen eines Rohres, mit einem Trägerelement (4), zumindest einer Dichtkontaktfläche (6), einer Verschlussvorrichtungsmittelachse (8) und zumindest einer Betätigungsvorrichtung mit mindestens einem Verstellelement (10), das relativ zum Trägerelement (4) aus einer ersten Position in eine zweite Position überführbar ist, wobei in der zweiten Position des Verstellelementes (10) die Verschlussvorrichtung (2) sich in einer Dichtstellung befindet, wobei das Verstellelement (10) relativ zum Trägerelement (4) um eine zur Verschlussvorrichtungsmittelachse (8) im Wesentlichen parallele Betätigungsachse (12) schwenkbar oder drehbar ist, wobei die Betätigungsvorrichtung ein Exzenterelement (14) umfasst, das um die Betätigungsachse (12) schwenkbar ist, wovon eine von der Betätigungsachse (12) abgewandte Gleitoberfläche (16) einen variierenden Abstand von der Betätigungsachse (12) hat und das zur Übersetzung einer Rotationsbewegung um die Betätigungsachse (8) in eine translatorische Bewegung ausgebildet ist, wodurch die gewünschte Flächenpressung der Dichtkontaktfläche (6), welche in der Dichtstellung nötig ist, durch eine Kraft in radialer Richtung hergestellt wird, wobei die Verschlussvorrichtung (2) zumindest ein durch die Überführung des Verstellelementes (10) von der ersten in die zweite Position translatorisch, parallel zu einer Übertragungsachse (20) verlagertes Übertragungselement (22) aufweist.

2. Verschlussvorrichtung nach Anspruch 1, **dadurch gekennzeichnet, dass** die Übertragungsachse (20) relativ zur Verschlussvorrichtungsmittelachse (8) um 80° bis 100° verkippt angeordnet.

3. Verschlussvorrichtung nach einem der vorhergehenden Ansprüche, **dadurch gekennzeichnet, dass** das Übertragungselement (22) an der Gleitoberfläche (16) anliegend angeordnet ist, wobei das Übertragungselement (22) durch die Bewegung der Gleitoberfläche (16) verlagert wird.

4. Verschlussvorrichtung nach einem der vorhergehenden Ansprüche, **dadurch gekennzeichnet, dass** zwischen dem Trägerelement (4) und dem Übertragungselement (22) zumindest eine die Bewegung des Übertragungselementes (22) parallel zur Übertragungsachse (20) führende Führungsanordnung (24) angeordnet ist

5. Verschlussvorrichtung nach einem der vorhergehenden Ansprüche, **gekennzeichnet durch** mindestens drei Übertragungselemente (22) mit jeweils zumindest einer von der Verschlussvorrichtungsmittelachse (8) abgewandten Pressfläche (26), welche in der Dichtstellung des Verschlusselementes (2) von einer gedachten Kreiszylindermantelfläche, deren Symmetrieachse mit der Verschlussvorrichtungsmittelachse (8) zusammenfällt, um höchstens ein Fünftel des Radius der Kreiszylindermantelfläche abweicht.

6. Verschlussvorrichtung nach Anspruch 5, **dadurch gekennzeichnet, dass** die Pressflächen (26) der Übertragungselemente (22) bei Betrachtung in Richtung der Verschlussvorrichtungsmittelachse (8) zur in Umfangsrichtung bündigen Anlage an die Rohrinnenfläche im Wesentlichen vollumfänglich um die Verschlussvorrichtungsmittelachse (8) verlaufend angeordnet sind.

7. Verschlussvorrichtung nach Anspruch 5 oder 6, **dadurch gekennzeichnet, dass** sich zumindest bei Befinden des Verstellelementes (10) in der ersten Position zwei benachbarte Übertragungselemente (22) bei deren Betrachtung in Richtung der Verschlussvorrichtungsmittelachse (8) mit je einem Seitenabschnitt (28) überlagern.

8. Verschlussvorrichtung nach Anspruch 7, **dadurch gekennzeichnet, dass** die Übertragungselemente (22) zwei an einen Mittelabschnitt (30) angrenzende Seitenabschnitte (28) aufweisen, wobei die in Richtung der Verschlussvorrichtungsmittelachse (8) gemessene Stärke der Seitenabschnitte (28) um zumindest ein Drittel, insbesondere um die Hälfte der Stärke des Mittelabschnittes (30) geringer ist als dessen Stärke.

9. Verschlussvorrichtung nach einem der vorhergehenden Ansprüche, **gekennzeichnet durch** mindestens ein Dichtelement (32), das die Dichtkontaktfläche (6) aufweist.

10. Verschlussvorrichtung nach Anspruch 9, **dadurch gekennzeichnet, dass** die Verschlussvorrichtung (2) genau ein Dichtelement (32) aufweist, welches als um die Verschlussvorrichtungsmittelachse (8) umlaufende Ringdichtung ausgebildet ist und die zumindest eine Dichtkontaktfläche (6) aufweist.

11. Verschlussvorrichtung nach Anspruch 9 oder 10, **dadurch gekennzeichnet, dass** das Dichtelement (32) in der Dichtstellung zumindest teilweise am Übertragungselement (22) anliegend angeordnet ist.

12. Verschlussvorrichtung nach einem der vorhergehenden Ansprüche, **dadurch gekennzeichnet, dass** das Trägerelement (4) überwiegend aus einem Polypropylen-Glasfaser-Composit besteht.

13. Verschlussvorrichtung nach einem der vorhergehenden Ansprüche, **gekennzeichnet durch** einen die Stellung des Verstellelementes (10) anzeigenden optischen Indikator (36).

14. Verschlussvorrichtung nach einem der vorhergehenden Ansprüche, **dadurch gekennzeichnet, dass** am Trägerelement (4) eine gasdurchlässige Membran (34) zur Ermöglichung des Durchtritts von Gas durch die Verschlussvorrichtung (2) angeordnet ist.

15. Verschlussvorrichtung nach einem der vorhergehenden Ansprüche, **gekennzeichnet durch** am Trägerelement (4) angeordnete Handgriffe.

## Claims

1. Closure device (2) for closing a pipe, having a carrier element (4), at least one sealing contact surface (6), a closure device central axis (8) and at least one actuating device with at least one adjustment element (10) which can be transferred relative to the carrier element (4) from a first position into a second position, wherein, in the second position of the adjustment element (10), the closure device (2) is located in a sealing position, wherein the adjustment element (10) is pivotable or rotatable relative to the carrier element (4) about an actuating axis (12) which is substantially parallel to the closure device central axis (8), wherein the actuating device comprises an eccentric element (14) which is pivotable about the actuating axis (12), from which a sliding surface (16) which faces away from the actuating axis (12) has a varying distance to the actuating axis (12) and which is formed to transform a rotational movement about the actuating axis (8) into a translational movement, as a result of which the desired surface pressure of the sealing contact surface (6) which is required in the sealing position is produced by a force in the radial direction, wherein the closure device (2) has at least one transmission element (22) which is displaced translationally, parallel to a transmission axis (20) from the first into the second position by transferring the adjustment element (10).

2. Closure device according to Claim 1, **characterized in that** the transmission axis (20) is arranged tilted by 80° to 100° relative to the closure device central axis (8).

3. Closure device according to any one of the preceding claims, **characterized in that** the transmission element (22) is arranged bearing against the sliding surface (16), wherein the transmission element (22) is displaced by the movement of the sliding surface (16).

4. Closure device according to any one of the preceding claims, **characterized in that** at least one guide arrangement (24) which guides the movement of the transmission element (22) parallel to the transmission axis (20) is arranged between the carrier element (4) and the transmission element (22).

5. Closure device according to any one of the preceding claims, **characterized by** at least three transmission elements (22) with in each case at least one pressing surface (26) which faces away from the closure device central axis (8) and which in the sealing position of the closure element (2) deviates from an imaginary circular cylinder barrel surface, the axis of symmetry of which coincides with the closure device central axis (8), by at most a fifth of the radius of the circular cylinder barrel surface.

6. Closure device according to Claim 5, **characterized in that** the pressing surfaces (26) of the transmission elements (22) are arranged, viewed in the direction of the closure device central axis (8), for flush bearing in the circumferential direction against the inner surface of the pipe running substantially fully circumferentially around the closure device central axis (8).

7. Closure device according to Claim 5 or 6, **characterized in that**, at least when the adjustment element (10) is located in the first position, two adjacent transmission elements (22) overlap with in each case one side portion (28) when they are viewed in the direction of the closure device central axis (8).

8. Closure device according to Claim 7, **characterized in that** the transmission elements (22) have two side portions (28) which adjoin a central portion (30), wherein the thickness, measured in the direction of the closure device central axis (8), of the side portions (28) is smaller by at least a third, in particular half of the thickness of the central portion (30) than its thickness.

9. Closure device according to any one of the preceding claims, **characterized by** at least one sealing element (32) which has the sealing contact surface (6).

10. Closure device according to Claim 9, **characterized in that** the closure device (2) has precisely one sealing element (32) which is formed as an annular seal which runs around the closure device central axis (8) and has at least one sealing contact surface (6).

11. Closure device according to Claim 9 or 10, **characterized in that** the sealing element (32) in the sealing position is arranged bearing at least partially against the transmission element (22).

12. Closure device according to any one of the preceding claims, **characterized in that** the carrier element (4) is composed primarily of a polypropylene-glass fibre composite.

13. Closure device according to any one of the preceding claims, **characterized by** a visual indicator (36) which displays the position of the adjustment element (10).

14. Closure device according to any one of the preceding claims, **characterized in that** a gas-permeable membrane (34) to enable the passage of gas through the closure device (2) is arranged on the carrier element (4).

15. Closure device according to any one of the preceding claims, **characterized by** handles arranged on the carrier element (4).

## Revendications

1. Dispositif de fermeture (2) permettant de fermer un tube, comportant un élément de support (4), au moins une surface de contact d'étanchéité (6), un axe médian de dispositif de fermeture (8) et au moins un dispositif d'actionnement doté d'au moins un élément de réglage (10) qui peut être transféré d'une première position à une deuxième position par rapport à l'élément de support (4), le dispositif de fermeture (2) se trouvant dans une position d'étanchéité dans la deuxième position de l'élément de réglage (10), l'élément de réglage (10) pouvant pivoter ou pouvant tourner par rapport à l'élément de support (4) autour d'un axe d'actionnement (12) sensiblement parallèle à l'axe médian de dispositif de fermeture (8), le dispositif d'actionnement comprenant un élément excentrique (14) qui peut pivoter autour de l'axe d'actionnement (12), dont une surface de glissement (16) opposée à l'axe d'actionnement (12) se situe à une distance variable de l'axe d'actionnement (12) et qui est réalisé pour convertir un mouvement de rotation autour de l'axe d'actionnement (8) en un mouvement de translation, de sorte que la pression superficielle souhaitée de la surface de contact d'étanchéité (6), laquelle est nécessaire dans la position d'étanchéité, soit produite par une force dans la direction radiale, le dispositif de fermeture (2) présentant au moins un élément de transmission (22) déplacé en translation parallèlement à un axe de transmission (20) par le transfert de l'élément de réglage (10) de la première à la deuxième position.

2. Dispositif de fermeture selon la revendication 1, **caractérisé en ce que** l'axe de transmission (20) est disposé de manière inclinée de 80° à 100° par rapport à l'axe médian de dispositif de fermeture (8).

3. Dispositif de fermeture selon l'une des revendications précédentes, **caractérisé en ce que** l'élément de transmission (22) est disposé en appui contre la surface de glissement (16), l'élément de transmission (22) étant déplacé par le mouvement de la surface de glissement (16).

4. Dispositif de fermeture selon l'une des revendications précédentes, **caractérisé en ce qu'**au moins un ensemble de guidage (24) guidant le mouvement de l'élément de transmission (22) parallèlement à l'axe de transmission (20) est disposé entre l'élément de support (4) et l'élément de transmission (22).

5. Dispositif de fermeture selon l'une des revendications précédentes, **caractérisé par** au moins trois éléments de transmission (22) comportant respectivement au moins une surface de pression (26) opposée à l'axe médian de dispositif de fermeture (8), laquelle, dans la position d'étanchéité de l'élément de fermeture (2), diffère d'une surface d'enveloppe circulaire cylindrique imaginaire, dont l'axe de symétrie coïncide avec l'axe médian de dispositif de fermeture (8), d'au maximum un cinquième du rayon de la surface d'enveloppe circulaire cylindrique.

6. Dispositif de fermeture selon la revendication 5, **caractérisé en ce que**, lorsqu'elles sont considérées dans la direction de l'axe médian de dispositif de fermeture (8), les surfaces de pression (26) des éléments de transmission (22) sont disposées de manière à s'étendre autour de l'axe médian de dispositif de fermeture (8) sensiblement sur toute la périphérie pour un appui en affleurement contre la surface intérieure de tube dans la direction périphérique.

7. Dispositif de fermeture selon la revendication 5 ou 6, **caractérisé en ce qu'**au moins lorsque l'élément de réglage (10) se trouve dans la première position, deux éléments de transmission (22) adjacents se superposent par une partie latérale (28) respective lorsqu'ils sont considérés dans la direction de l'axe médian de dispositif de fermeture (8).

8. Dispositif de fermeture selon la revendication 7, **caractérisé en ce que** les éléments de transmission (22) présentent deux parties latérales (28) adjacentes à une partie centrale (30), l'épaisseur, mesurée dans la direction de l'axe médian de dispositif de fermeture (8), des parties latérales (28) étant inférieure à l'épaisseur de la partie centrale d'au moins un tiers, en particulier de la moitié de l'épaisseur de la partie centrale (30).

9. Dispositif de fermeture selon l'une des revendications précédentes, **caractérisé par** au moins un élément d'étanchéité (32) qui présente la surface de contact d'étanchéité (6).

10. Dispositif de fermeture selon la revendication 9, **caractérisé en ce que** le dispositif de fermeture (2) présente exactement un élément d'étanchéité (32), lequel est réalisé sous forme de joint d'étanchéité annulaire s'étendant autour de l'axe médian de dispositif de fermeture (8) et présente l'au moins une surface de contact d'étanchéité (6).

11. Dispositif de fermeture selon la revendication 9 ou 10, **caractérisé en ce que** l'élément d'étanchéité (32) est disposé au moins partiellement en appui contre l'élément de transmission (22) dans la position d'étanchéité.

12. Dispositif de fermeture selon l'une des revendications précédentes, **caractérisé en ce que** l'élément de support (4) est constitué principalement d'un composite polypropylène-fibres de verre.

13. Dispositif de fermeture selon l'une des revendications précédentes, **caractérisé par** un indicateur (36) optique indiquant la position de l'élément de réglage (10).

14. Dispositif de fermeture selon l'une des revendications précédentes, **caractérisé en ce qu'**une membrane (34) perméable aux gaz permettant de faciliter le passage de gaz à travers le dispositif de fermeture (2) est disposée sur l'élément de support (4).

15. Dispositif de fermeture selon l'une des revendications précédentes, **caractérisé par** des poignées disposées sur l'élément de support (4).
